# EUROPEAN PATENT APPLICATION

(11) **EP 1 239 677 A2**
(43) Date of publication of application: **11.09.2002**
(21) Application number: 01129100.2
(22) Date of filing: 07.12.2001
(51) Int. Cl.: H04N 7/24, H04N 7/52

(54) **Method for the transmission and synchronization of multimedia data through computer networks**

(30) Priority: 13.12.2000 AR 0106605
(71) Applicant: Krolovetzky, Miguel Horacio, C1107AAR Buenos Aires (AR)
(72) Inventor: Krolovetzky, Miguel Horacio, C1107AAR Buenos Aires (AR)
(74) Representative: Maldonado Jordan, Julia

(57) **Abstract**

A method for the transmission and synchronization of multimedia data through networks of computers is presented. This method provides the technology for a continuous transmission and synchronization of multimedia data to servers and clients computers through a network of different types of nets which might include LAN, WAN as well as Internet with its different types of connections such as ISDN, cable T1 and Dial Up connections (modems). Synchronization scripts include markers for the synchronization of the videos with notes which can be text or graphics in html format. In the video production module the connection types for the transference are calculated, compression is performed, markers and the respective synchronization scripts for the transference are generated. The videos and their corresponding scripts are stored in the web server to be transmitted upon request of the client computers. In the video compression it is possible to have adaptable support for several types of connections (from DialUp to T1-T3), resolutions (from 176x144 to 640x480), and frame rates (from 1 to 30 fps).

## Description

The present invention relates to a technology for transmission and synchronization of multimedia data on computers networks and it is specifically referred to the continuous and synchronized transmission of data in multimedia format through several types of computers networks, and particularly through Internet.

Due to the fast growth of the connections to the Internet, this has been growing to be accepted as a new massive communication method. As a consequence of its high acceptance and the necessity to constantly transmit more information in diverse and interactive formats such as audio and video, broadband requirements grow notoriously according to the type of multimedia data to transfer.

For example, the current transmission of a standard quality video with standard frame rate requires an ISDN connection, meanwhile the broadcasting or streaming of a high quality video for several users requires a T1 connection. Therefore, the capacity to transfer multimedia data through internet is limited by the broadband features, the costs of faster connections, and the capacity of the servers and user computers.

Current Internet applications, such as the web browsers and electronic mailers are capable of transferring and presenting graphics and texts. Nevertheless, none of these applications provide an effective platform for the integrated transmission of multimedia data.

As regards to the current situation, new techniques for the integrated transmission of multimedia contents are being developed, while the net resources are used efficiently and the client computers cycles are being minimized.

The slowness in the download of the pages of such audio and video stream sites is caused by those plug-ins, because as these enter the web page they don't use the current connection of the browser (Internet Explorer ® or Netscape Navigator ®) but it connects to another specific server where the application is (that is to say, the program for that web page, uses a double broadband as if browsing two pages at the same time.)

Therefore, one of the objectives of this development is to provide a method for the multimedia data compression and transference on computer networks which shall not require the download of any programs (the so called plug-in programs), whether small or not, for the proper viewing and appraisal of internet sites or similar which may present audio and video stream transmissions.

It is also an objective of the current development to provide a method for the streaming transmission of images and sound through a telecommunications network such as internet or a similar net which does not require major broadbands as T1, T3, ISDN, cable or such, for the proper viewing and access to those virtual sites.

Therefore, it is an objective of the present development to provide a method for audio and video streaming on a computer network in real time with a better data transference for the exposition of the images destined to generate virtual worlds on that computer network, in order to be used, for example, for advertising, products sales, virtual cities or communities purposes, in those cases the method comprehends the following steps: importing the video to be processed; editing the video in several sequences; editing each video sequence in high quality resolution; fractionating that video sequence in a smaller or similar size to such video sequence; exporting those video fractions to at least one external file; importing those external files from a controller and images handling program; submitting those files to a processing cycle of at least one video compressor; applying a combination of filters to those files in order to set parameters for colors and sounds in an homogeneous sequence; assigning of graphic filters to the video; implementing markers in the video in packets, in contrast to most of the current technologies which do it individually; filtering the audio in several layers; synchronizing audio with the video scenes by markers in the audio tracks; making scripts for the synchronization of audio and video; generating controls for the movies; programming the TOC, the table which makes the dynamic calls performed by the controls;

In order to achieve a better understanding of the object of this technology, this has been illustrated in several figures where it has been represented in one of the preferred forms of realization, as an example, in which:
Figure 1 is the blocks diagram of an exemplary disposition of a computer for the understanding of several aspects of the present technology.
Figure 1B is a scheme that shows the process of the Video on Demand in internet, which utilizes the object of this technology.
Figure 2 is a scheme of the internal production of the object of this technology from the first moment of the development until the request is performed by the user to the server.
Figure 3 is a flow diagram which shows the audio and video transference process.
Figure 4 is a scheme of the storage of the video and audio packets.
Figure 5 is an image which shows the screen in the user's computer.
Figure 6 is an image which shows an example of the program used for the preparation of the video.
Figure 7 is a scheme which describes graphically how the client PC interprets the data input and shows them on the screen.

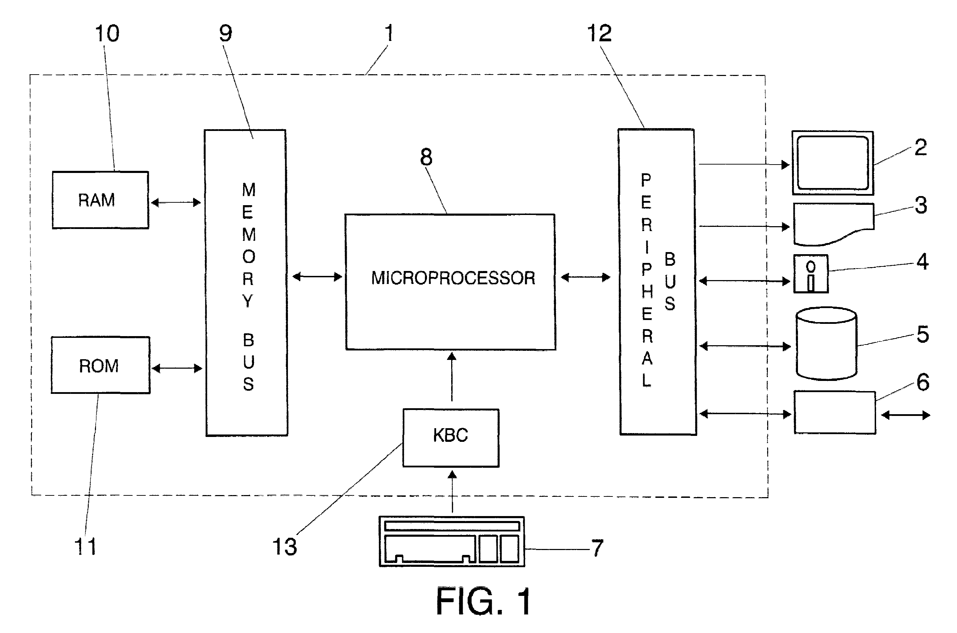

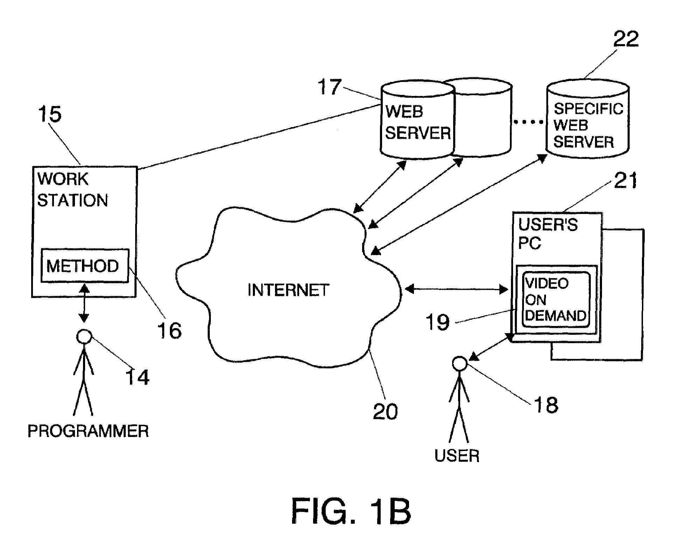

As regards to Figure 1, it shows the disposition 1 which includes a screen (or monitor) 2, a printer 3, a floppy disk drive 4, a hard disk 5, a network interface 6, and a keyboard 7. Such disposition includes also a microprocessor 8, a memory bus 9, random access memory (RAM) 10, read only memory (ROM) 11, a peripheral bus 12, and a keyboard drive 13. Such disposition 1 can be a personal computer (PC, like an IBM PC or Apple PC) or another type of computer.

The microprocessor 8 is a digital processor for general purposes which controls the operation of disposition 1. It may be a single chip processor or can be implemented with several components. By instructions sent by the memory 10, 11, the microprocessor 8 controls the reception and management of the data input and output and exposes the data to the external devices 2, 3, 4, 7, etc.

The memory bus 9 is utilized by the microprocessor 8 to access to the RAM 10 and the ROM 11. The RAM 10 is used by the microprocessor 8 as area of general storage and temporary memory and it can also be used to store input data as well as processed data. The ROM 11 can be used to store instructions or codes used by the microprocessor 8 as well as other types of data.

The peripheral bus 12 is used to access the devices used for input, output and storage used by the disposition 1. These devices include the monitor 2, the printer 3, the floppy disk drive 4, the hard disk 5, and the network interface 6. The keyboard drive 13 is used to receive the data input from the keyboard 7 and to send decoded symbols for each pressed key to the microprocessor 8 through the bus 12.

The monitor 2 is an output device which presents images of the data provided by the microprocessor 8 through the peripheral bus 12 or by other system components of the disposition. The printer 3 presents an image on a paper or similar surface (not illustrated). Other output devices as a plotter (not illustrated) can be used instead of the printer 3.

The floppy disk drive 4 and the hard disk 5 can be used to store several types of data. The floppy disk drive 4 facilitates data transportation to other computer dispositions, and the hard disk 5 allows the easy access to large quantities of data. The microprocessor 8, along with the operating system, operates and runs the machine code, and produces and uses the data. The code and data reside in the RAM 10, ROM 11 or in the hard disk 5. The code and data can also reside in a removable device and be charged or installed in the system when necessary. CD-ROM, PC-CARD and magnetic tapes (not illustrated) are examples of removable devices. The interface circuit of the network 6 is used to send and receive data on a network connected to other computer dispositions.

An interface plaque or a similar device along with the appropriate software implemented by the microprocessor can be utilized to connect the disposition to an existing network and transfer data according to standard protocols.

The keyboard 7 is utilized by the user to enter commands and other instructions to the system. Other types of input devices can also be used with this technology, for instance, mouse, trackball or video-capture card.

As regards to Figure 1B, it can be observed that the programmer 14 is in the workstation 15, preparing the method 16, object of this technology.

Once the method 16 is finished and compiled, the following step is to connect to the web server 17 and run the application which will handle the connections and give the orientation to the Path to upload the audio visual material. When a user 18 is informed of a new event to be broadcast, he connects to his provider and then he accesses to the net 20. The user 18 enters the server address 17 and when he is connected, he obtains the first web page of access to the site.

Some type of payment system for the service, such as the Pay per View © methodology, can be used when the user 4 enters the video section in that web page.

The user 18 requests the video he wishes to see, the web server 17 then connects him to the specific web server 22 and the simultaneous transference of packets starts, which can be viewed in top to bottom order. When the controls appear on the screen, the server buffer is then ready for the connection, so the user can start to watch the video 21.

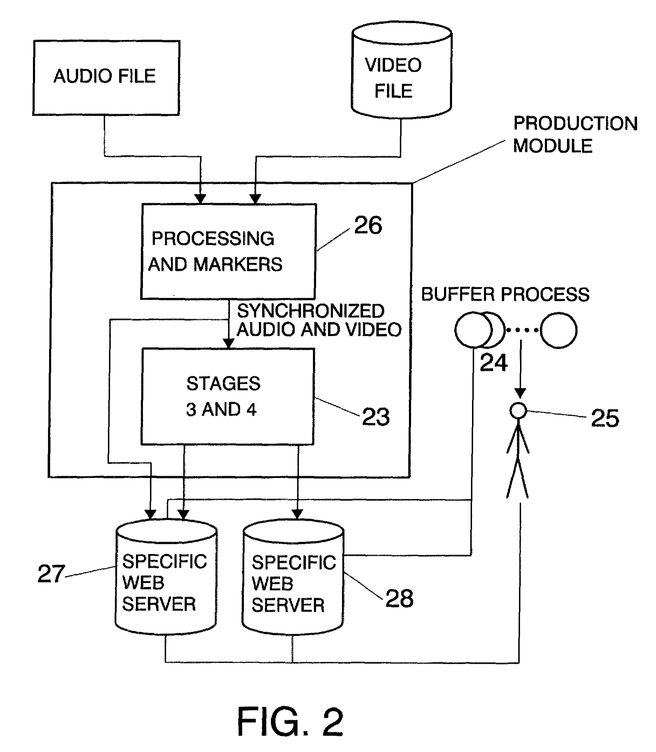

As regards to figure 2, it shows how the application internal production works from the first moment of the development until the user performs requests to the server. There are primarily two main components of the method of our technology: the audio and the video files. It is worth to mention that the audio and video files can be integrated in the same file as well. The production module illustrates the different stages the two files go through until they reach the server. In the processing and markers module, that is to say in the first stages of our development, is where the basis of the whole broadcasting is generated, because it is there where the synchronization of the audio and video is determined, as well as the future actions localized in the markers.

Once the generation of the chosen format and the calculation of the type of connection to be used is performed, the method of this technology must be divided in the synchronized audio and video in order to allow the user to use only the audio, video or other language.

The finished product, which is ready for the direct streaming without synchronization, is located in a web server 27 specific for this type of streaming with no synchronization requirements. The other part, the audio-video, which will be broadcast simultaneously (synchronized) undergoes stages 3 and 4 23 where functions are assigned to the markers in the audio and video packets. And the TOC or table content is generated. Once the stages 3 and 4 23 are concluded, they are sent to the second specific server 28 in order to wait for the user 25 to connect.

In one case, the user 25 connects to the specific primary server 28, and according to the request he posts (only audio or broadcasting) the connection is derived to the secondary specific server 27 or not. In the case of audio and video streaming (synchronized) 9, the request enters the server 28, the server processes it and sends the audio and video in "packets", synchronizing it with its markers; on its turn, it generates a buffer 24 in order to work in the client PC 25. This produces a delay of a few seconds in the playing (which varies according to location, connection, etc.); once the buffer 24 has been generated, the server starts to synchronically send the information packets which have the audio and video, keeping the buffer active in case the connection fails, and maintaining the connection even when the transference rate diminishes.

On the other hand, in the case of unsynchronized audio or video, the request enters the primary server 28, as this request is only constituted by audio or video, synchronization of the markers is not necessary but there has to exist synchronization in the buffer 24 handling. The connection is deviated to the secondary specific server 27, which starts the generation of buffering and the corresponding transference of audio packets; after they have been processed 26, they have a transference rate lower than 500 bytes, which is why an elevated buffer assignation is not necessary.

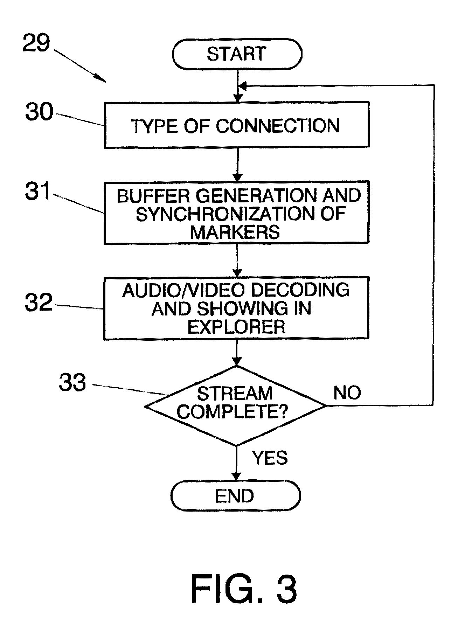

As regards to figure 3, the scheme illustrates the audio and video transference process. Firstly, the module 30 is entered, where the connection is evaluated to be derived to the different servers (upon user's request). After this, in the server assigned for the request, we enter the module 31 where the buffer is generated (according to the connection) and synchronization for the markers is produced. Once the buffer is generated and all the markers are synchronized 31, starts the so called Streaming o data transference among computers without complete download of the data needed for its visualization which sends low density audio and video packets to be watched quickly; and once the user's PC receives them, it decodes the packets and plays the video and the audio 32.

While the user is watching the video, the disposition maintains the communication with the user's PC to verify if the Streaming is over. If it is not completed, the cycle repeats itself 33, going again through the connection type detection, buffer generation, etc. We take into account that if the Streaming has not finished, there must exist some type of problem that could have been generated during the connection 1, such as a fall or reduction of the transference rate (the communication between the specific server and the user's PC). In that case, the connection type must be verified again.

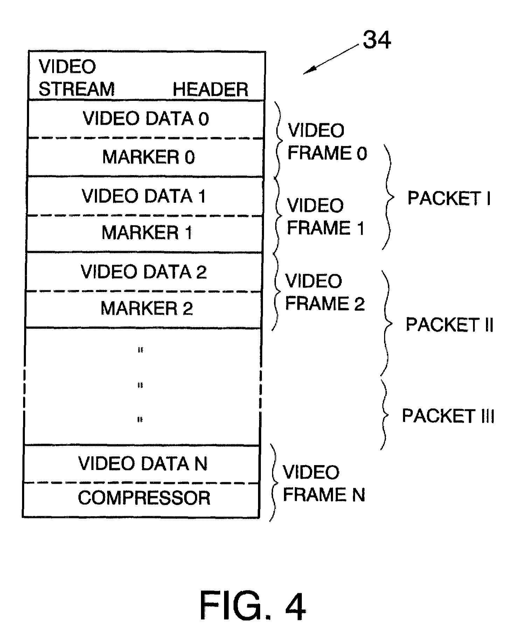

The figure 4 shows the type of storage of the video and audio packets. In fact, such scheme 34 shows how the markers are stored within the same frame and how a video packet is generated for its transference; each packet contains two or more frames, which vary according to their density; markers, on the other hand, are located inside every frame. After that process, markers, which are independent from the packets, are generated; they are, though, dependant from the frames in order to be better handled at the time of the transference of the packet. The markers are in charge of frame synchronization but they are not responsible for the packets synchronization which is made by the server. It must be noted that the dominant factor of the storage 34 is the quantity of packets for the quantity of independent markers; for that, it has to be cleared that the logic of the assigned markers to a particular frame lies in the ensuing frame.

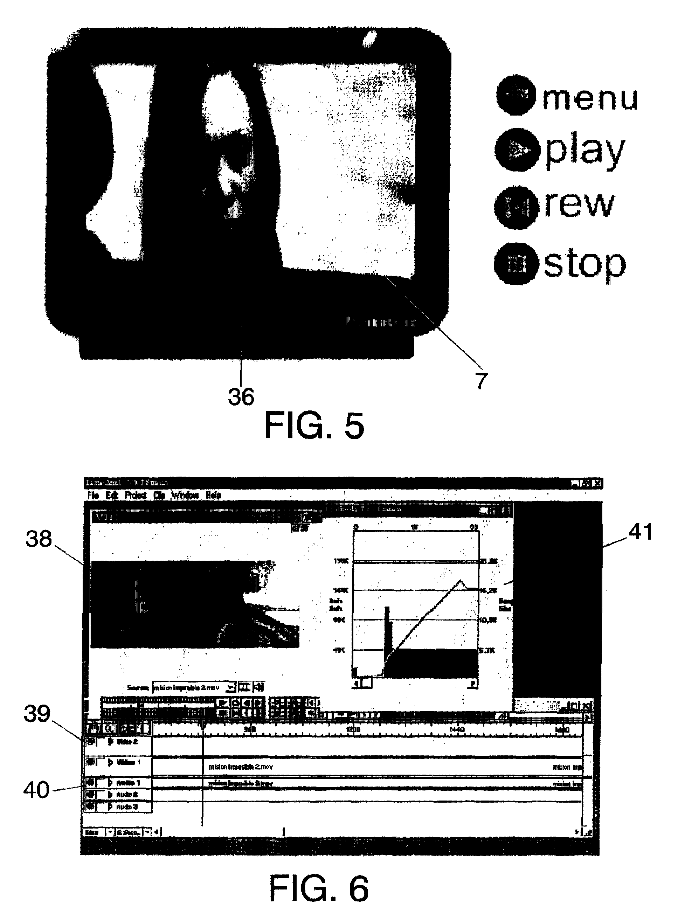

The Figure 5 illustrates how the user's screen is shown. The reference 1 shows the controls menu; those controls are assigned to functions run by scripts or macros for the management of the markers. These controls can be used to scroll the video back or forward, or fast forward or rewind it. Reference 2 shows the frame for the broadcasting, this frame appears while the buffer is loading, along with an explicative message. Reference 3 shows the (video) frames; it does not start immediately but a message appears in the screen until the buffer loads up to a certain percentage and then it synchronizes with the audio markers and starts to play it.

It is noteworthy that the requirements of the computer are standard, and no special audio or video plaque or hardware is requested.

In Figure 6 there is an example of the software or program used for the preparation of the video. The reference 38 indicates the main video to be edited. Reference 39 shows the edition line of the video; in this section the markers can be placed, as well as there can be placed variations in the density type of a particular frame. It is important to note that it is necessary that each frame has the same size and density. Reference 40 is the audio edition line (if it has one) where the markers can be placed as well as change the sound amplification, frequency type and sound type (as stereo or mono).

Reference 41 indicates the transference graphic or -Data Stream Graf-; it shows that the stream changes or diminishes according to the quantity of changes we assign to the packets. It important to note that its management is fundamental, because the connection types depend from this graphic.

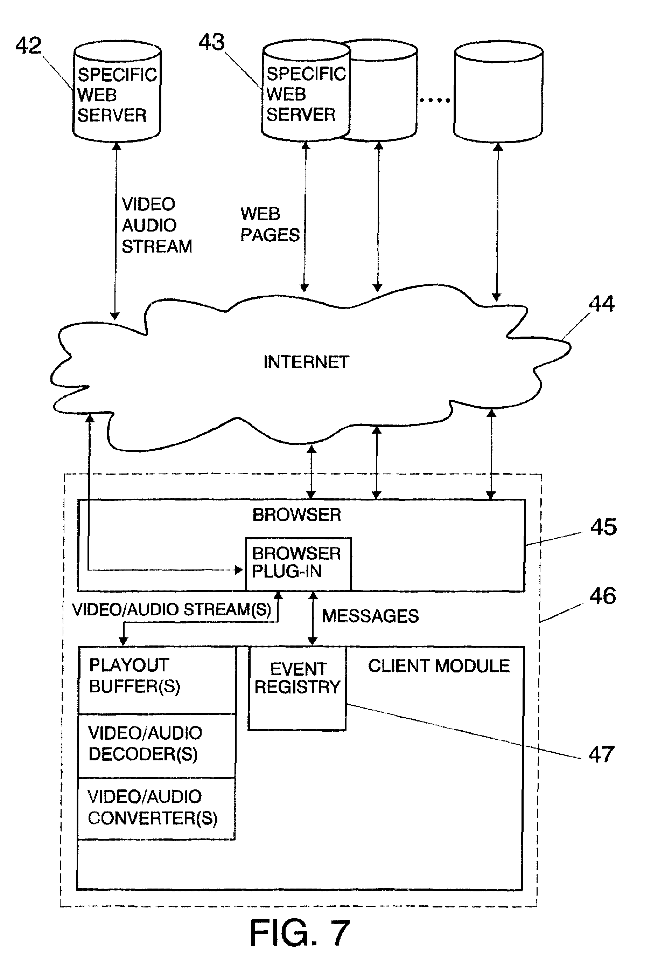

Figure 7 is a scheme that shows graphically how the user's PC interprets the input data and shows them in the browser. In fact, the client's PC 46 includes a browser and a plug-in module 45 which acts as an interface with the browser, with a module of the main client. The module of the main client has an events registry, output buffers, audio and video decodifiers and audio and video converters.

It is worth to note that the principal feature the method of the audio / video transmission of the present technology has is the form of transmission, which has several stages, taking into account the connection types available currently, with the packets creation being fundamental for the transmission and an adequate decoder for the transference process. The difference lies not only in the transmission by packets, but the new methodology diversification for the Internet transmission does not allow the buffers handling in the server, by which the client is not draw to perform any installation, nor plug-ins installations, external programs (decodifiers, etc.), and the similar. The variation in the method of the compression of images and frames markers for external calls are the product of several years of research, which is covered by the extension of this technology.

## Claims

1. A method for the transmission and visualization of images and audio streaming on a computers network in real time and a higher data transference speed for the exposure of such images with the aim of generating publicity, products sales, virtual communities or groups, audio/video streaming, etc., said method comprising the following steps:
• Edition of a video sequence with higher quality resolutions:
• Fraction such video sequence into a smaller or equal size video sequence;
• Exportation of such video fractions to at least one external file;
• Compilation of those external files from an image management and treatment program;
• Submission of those files to a processing cycle using at least one video component compressor;
• Application of a combination of filters to those files in order to set parameters for colors and sounds in an homogeneous sequence;
• Addition of at least one video component compression;
• Exportation of the combination by the use of a filter;
• Complementation of the combination with instructions for its control and execution in a server.

2. A method as described in claim 1, **characterized by** using the primary connection to a server for the interaction between a user and a server.

3. A method as described in any of the preceding claims, **characterized by** using a principal server for the audio and video applications streaming.

4. A method as described in any of the preceding claims, **characterized by** the real time feature in the data transference between a user and a server.
